# EUROPEAN PATENT APPLICATION

(11) **EP 4 664 100 A1**
(43) Date of publication of application: **17.12.2025**
(21) Application number: 25179343.6
(22) Date of filing: 28.05.2025
(51) Int. Cl.: G01N 21/88, G01N 21/896, G01N 21/958, G01N 21/84, G01N 21/95

(54) **METHOD FOR MATERIAL TESTING OF AN OBJECT IN A PRODUCTION AND/OR CONVEYOR LINE AND INSPECTION APPARATUS**

(30) Priority: 11.06.2024 DE 102024116295
(71) Applicant: ISRA VISION GmbH, 64293 Darmstadt (DE)
(72) Inventor: Droste, Josef, 49219 Glandorf (DE); Eickelberg, Stefan, 44807 Bochum (DE); Tasse, Dr. Stefan, 46514 Schermbeck (DE)
(74) Representative: Keil & Schaafhausen Patentanwälte PartGmbB

(57) **Abstract**

The invention relates to a method for material testing of an object (2) in a production and/or conveyor line and an inspection apparatus (10) adapted for carrying out the material testing. During material testing, the object (2) is transported along a conveying direction (4) in a conveying plane (3) of a production and/or conveyor device (1), an optical inspection device (11) is positioned at at least one previously identified potential defect location (30) of the object (2) and at least one image is taken by the optical inspection device (11) at the potential defect location (30) of the object (2, 102). The object (2) is moved during the material testing, and the optical inspection device (11) is moved along with the object (2), the at least one image being taken by the optical inspection device (11) during the movement of the object (2, 102) and optical inspection device (11). (Fig. 1)

## Description

The invention relates to a method for material testing of an object in a production and/or conveyor line according to the preamble of claim 1 and an inspection apparatus for material testing of an object transported in a production and/or conveyor line by means of a production and/or conveyor device along a conveying direction of a conveying plane at a conveying speed according to the preamble of claim 9.

In the proposed method, the object is transported along a conveying direction in a conveying plane of a production and/or conveyor device. The method can be carried out using an appropriately equipped inspection apparatus with at least one optical inspection device, which is also referred to below simply as the inspection device. For this purpose, it is provided that the optical inspection device is positioned at (in the sense of "in front of") at least one previously identified potential defect location of the object. A potential defect location of the object is a position recognized on the object at which there may be a defect location that is to be examined by material testing. The aim and/or purpose of material testing is to identify and/or classify a defect to be able to decide whether there really is a (relevant) defect that leads to the object having to be sorted out as defective and/or to be reworked.

During carrying out the method, at least one image (of the potential defect location) is taken by the inspection device at the potential defect location of the object. Typically, there are several potential defect locations on the object, each of which is to be examined and evaluated by the material testing. For this purpose, the optical inspection device can be moved in sequence to the various potential defect locations and the material testing can be carried out in particular by taking one or more images of the defect location or defect locations. In this text, an image is to be understood as an image of the defect location.

Such a method is known, for example, from CN 109632828 B, which describes a system and a method for the re-inspection of flat glass defects. In automated online inspection, the same coordinate system is used for surface inspection and re-inspection. The exact positioning of the re-inspection head is based on the coordinates provided by the surface inspection. The re-inspection identifies individual defects. The re-inspection head is moved to a defect location and several images of individual glass layers are selectively taken there.

The disadvantage of the re-inspection method described is that the flat glass or the object in the conveyor or production line must be kept stationary during the surface inspection and the subsequent re-inspection. The object does not move during the re-inspection and imaging.

Modern production systems, for example in TFT or flat glass production, are achieving increasingly shorter unit production times. Cycle times of 10 seconds per piece are quite common. Conventional methods of inspection, such as those described above, in which the objects are stopped and examined (reviewed), reach their technical limits at such cycle times. A large part of the cycle time of a workpiece (object) is required for transportation. This is around 60% to 70% of the time available in the cycle time. The standstill times available for re-inspection are correspondingly 3 to 4 seconds. During this time, 1 to 2 rechecks can be carried out. If a higher number of potential defects are to be inspected, the still stand times (and thus the cycle times) must be extended just to carry out the careful inspection tasks. This is disadvantageous and is often not accepted in production plants because it reduces the production yield.

The problem of the invention is therefore to propose a method for material testing in production or conveyor lines in which more material testing operations can be carried out within the available cycle times.

According to the invention, this problem is solved by a method for material testing with the features of claim 1 and an inspection apparatus for material testing with the features of claim 9, with which the proposed method can be carried out.

In particular, it is provided that the object is moved during the material testing (according to a preferred embodiment of the invention uniformly) and the optical inspection device is moved along with the object (according to the preferred embodiment of the invention with the same uniform movement of the object), wherein the at least one image is taken by the optical inspection device during the movement of the object and the inspection device. According to the invention, it is thus proposed that the optical inspection device is moved synchronously with the object and that the images are taken during the synchronous movement of the object and the inspection device. According to the invention, the material testing is thus carried out during the movement of the object. By utilizing not only the standstill times but also the conveying times during the cycle times, the number of possible checking processes (Review) can be increased with the same transport parameters and cycle times without extending the standstill times, typically to 5 to 10 checking processes instead of 1 or 2 checking processes, which were limited to the standstill times.

According to one embodiment of the proposed method, it can therefore be provided that the optical inspection device is positioned in sequence at at least two previously identified potential defect locations of the object, preferably at at least 3 or 4 potential defect locations and particularly preferably at up to at least 5 to 10 defect locations. By this is meant that each of exactly one optical inspection device of an inspection apparatus (inspection system) with possibly also several inspection devices is positioned at the said potential defect locations. By utilizing the transport time in motion according to the invention, there is enough time for this.

In one embodiment of the invention, an imaging unit (camera) with a microscope can be used as the optical inspection device. This allows high-resolution images of the potential defect locations of the object, which enable accurate detection and classification of defect locations, such as material inclusions (e.g. air inclusions or trapped particles), surface defects during production (e.g. unevenness) or damage (e.g. scratches).

According to a further preferred embodiment of the invention, it can be provided that at least two images are taken of each potential defect location of the object. According to the invention, this can be done during the movement of the object and the optical inspection device such that the absolute spatial position of the object and the inspection device (relative to the stationary conveyor) is different for each image, but the relative alignment between the object and the inspection device remains or is the same.

In a particular embodiment of the invention, the orientation of the inspection device relative to a plane parallel to a surface of the moving object remains unchanged during the imaging of the plurality of images of the potential defect location (i.e. the inspection device is moved along with the same movement over the transported object according to the invention), wherein the spacing between the object or the surface of the object and the inspection device changes, preferably along a direction perpendicular to the surface of the object. Thus, a potential defect location on the surface of the object is always at the same image position in the image of the inspection device when the optical axis of the inspection device is perpendicular to the surface of the object and the potential defect location is in the optical axis of the inspection device. According to one embodiment of the proposed method, the optical axis of the inspection device can be oriented perpendicular to the surface of the object at the potential defect location.

The reason for moving the inspection device along a direction perpendicular to the surface of the object is that the imaging of the inspection device must be taken with a very short exposure time to avoid motion blur. The term "very short exposure time" is used when movement of the object and the inspection device during the exposure time can be neglected so that no motion blur occurs in the image taken.

This requires imaging with good illumination and a large aperture of the imaging optics of the inspection device. The latter leads to a shallow depth of field and the need to precisely adjust the spacing between the surface of the object and the inspection device to obtain a sharp image of the object's surface. This accuracy of spacing is difficult to maintain with an object transported on a conveyor line and an inspection device moving along with it. For this purpose, a series of several images of the potential defect location on the surface of the object can be taken in accordance with the invention, wherein the spacing between the surface of the object and the inspection device is changed in steps between the successive images. The amount of the change in spacing ("height of the step in the step change") can be selected particularly preferably just so that it corresponds to the depth of field range of the imaging optics. When the spacing between the surface of the object and the inspection device is set approximately to a sharp image, imaging of the image series with a stepwise change in spacing ensures that at least one image of the image series shows a sharp image surface in accordance with the invention. According to a particularly preferred embodiment of this variant of the invention, 4 to 10 images could be taken in a series of several images.

In the case of a transparent object, according to a further embodiment of the invention, it can be provided that the range of the change in spacing during the imaging of the multiple images corresponds at least to the thickness of the transparent object in the imaging direction. As a result, a sharp image is taken at every depth of the transparent object along the recording direction. This makes it possible to identify and/or classify defects enclosed in the transparent object, e.g. flat glass.

If the optical axis of the inspection device is not oriented perpendicular to the surface and/or the inspection device is not positioned so that the potential defect location is on the optical axis, a further effect can occur if several images of the potential defect location are taken in a series of images at different spacings. The smaller the spacing between the object and the inspection device, the smaller is the surface area of the object shown in the image, which is shown slightly enlarged in the image (which is always the same size). Defects that are not in the optical axis (i.e. the center of the image) move towards the edge of the image (and are displayed larger) as the spacing becomes smaller. This makes it more difficult to determine the exact position of the defect on the object. In a further embodiment according to the invention, it can be provided that during the imaging of the multiple images, the orientation of the inspection device relative to the object is also changed in a plane parallel to the surface of the object. In particular, this can be done simultaneously and in coordination with the change in the spacing between the inspection device and the object. According to a particularly preferred embodiment of this variant, the relative orientation of the inspection device and the object can be changed such that the potential defect location, e.g. a center point of the potential defect location, is always at the same image position. This is possible in a calibrated system by means of simple beam geometric considerations, which are known to the skilled person and need not be explained further. In particular, a calibrated system means that the imaging properties of the optics of the inspection device and the spacing between the object and the inspection device are known. This will be explained in more detail later.

Another preferred embodiment of this variant can be used in particular for transparent objects, where the imaging of the multiple images with different spacings between the surface of the object and the inspection device in a series of images allows different planes within the object each to be imaged sharply. Visual beams from the inspection device that strike the surface of the object at an angle are refracted according to the law of refraction (depending on the optical density of the object) as they pass through the object. This change in the angle of the visual beam can also be calculated in the system according to the law of refraction. This is known to the skilled person and need not be explained further. According to the invention, it is proposed in this embodiment that the relative orientation of the inspection device to the object in a plane parallel to the surface of the object is changed such that a selected image position, for example the position of the optical axis or a potential defect location, follows the beam path in the object. This achieves a particularly high level of accuracy when identifying the position of defects, even in the transparent object.

According to a further preferred embodiment of the invention, which can also be combined with the further embodiments described, it can be provided that at least one image is taken in bright field illumination and at least one image is taken in dark field illumination. If the object is transported lying on a production and/or conveyor device, preferably incident light illumination (and no transmission illumination through the object) is provided. Irrespective of the type of production and/or conveyor device, incident illumination is suitable for all materials (transparent and non-transparent materials), whereas transmission illumination is only suitable for transparent materials. Against this background, incident light illumination is particularly preferred according to the invention and is also constructively easier to handle than transmission illumination. In the case of (at least partially) transparent or opaque materials, however, the invention can in principle also be realized with transmission illumination.

In a simple embodiment, bright field illumination is realized, for example, such that the light is irradiated onto the object such that (in the case of a reflective object) at least a large part of the irradiated light is or would be reflected into the (one) imaging optics of the inspection device. In a correspondingly simple embodiment of dark-field illumination, the light is irradiated onto the object at an angle such that (in the case of a reflective object) the light is not or would not be reflected into the (one) imaging optics of the inspection device. In such a case, irregularities or scratches on the surface of the object result in some of the light being reflected by the irregularities or scratches into the imaging optics and these irregularities or scratches are easily recognizable in the image (as bright areas in a dark image).

Preferably, the optical inspection device comprises an imaging unit (preferably a camera with imaging optics, wherein the imaging optics can be designed as a microscope according to a preferred embodiment) and an illumination unit (preferably with bright field illumination and dark field illumination), wherein the imaging unit and the illumination unit are fixed to each other (i.e. not movable during use) according to a particularly preferred embodiment. This simplifies the positioning of the inspection device.

A further preferred embodiment of the invention may provide that the optical inspection device is arranged on a positioning device, wherein the optical inspection device is moved with or by the positioning device in the conveying direction of the object along with the movement of the object. According to a preferred embodiment, the positioning device can be stationary fixed to the production and/or conveyor device. This makes it particularly easy to track the movement in the conveying direction of the object with the positioning device, because the conveying plane, the conveying direction and the conveying speed are predefined relative to the production and/or conveyor device.

In this context, it may be particularly preferable to use a SCARA robot with (at least or exactly) three rotary axes of movement and (at least or exactly) one translatory axis of movement in a serial kinematic system as the positioning device, with all movement axes oriented perpendicular to the conveying plane. Such a positioning device makes it possible to carry out uniform movements particularly quickly and with repeat accuracy in a plane of movement that is oriented parallel to the conveying plane, in particular. This means that the optical inspection device can be moved particularly uniformly with the uniformly moved (i.e. transported) object by the preferably proposed positioning device.

A serial kinematic system means that the coordinate origin of a subsequent axis of movement is only dependent on the previous axis of movement. This makes it possible to preconfigure movement sequences in a predefined direction, i.e. the conveying direction of the object in the production or conveyor device, in a control unit for a defined initial position and, by simultaneously adjusting the three rotation axes in a uniform movement, to move the optical inspection device with the object such that the image section of the images at a potential defect location remains unchanged (within the required accuracy) (i.e. to achieve synchronous movement). In this way, several images can be taken during the movement and compared directly with each other. Other aspects of possible relative movements between the object and the inspection device have already been described and can be easily achieved with the positioning device.

Preferably according to the invention, the conveying speed of the object along the production or conveyor line is known in the control device. This can be read out via an interface of the production or conveyor device and/or be measured by a suitable sensor system in a manner known in general. Production and/or conveyor devices for sensitive products are also known which achieve a particularly uniform and precise conveying speed using suitable control and/or feed-back control units. Such production and/or conveyor devices can be used according to the invention for the implementation of the invention.

According to a particularly preferred embodiment, the SCARA robot can be stationary fixed to a frame of the production and/or conveyor device adjacent to or (e.g. by means of a transverse strut) above the conveying area with a first axis of rotation that rotates a first arm. A second axis of rotation is provided at the end of the first arm opposite the first axis of rotation, which rotates a second arm. A third axis of rotation, to which the optical inspection device is fixed, is provided at the end of the second arm opposite the second rotational object. This allows the optical inspection device to be positioned above the object in a segment of a circle (the size of which is predefined by the lengths of the first and second arms). The third axis of rotation allows the orientation of the optical inspection device relative to the object to be kept constant during the movement of the object.

According to a particularly preferred embodiment of the invention, the third of the aforementioned axes of rotation also enables a translatory movement of the optical inspection device in the axial direction (i.e. an axial movement) to adjust the spacing between the optical inspection device and the object. Due to the preferred arrangement of the axes of rotation perpendicular to the conveying plane according to the invention, the spacing between the optical inspection device and the object does not change during the movement. In principle, the translatory movement can also take place along the other axes of rotation. This is also covered by the invention. However, it corresponds to a preferred embodiment to adjust the spacing between the optical inspection device and the object via the third axis of movement. In this case, only one adjustment of the optical inspection device is necessary, without having to additionally move the weight of the first and/or second arm with the corresponding actuators. This allows a simpler and less vibrating adjustment.

Preferably, the optical inspection device can comprise a spacing sensor that measures the spacing between the object and the optical inspection device during the movement. The spacing between the object and the optical inspection device can be tracked during the movement and thus kept constant by translational adjustment about one of the axes of rotation, preferably the third axis of rotation as described. In principle, any spacing sensor can be used for this purpose.

According to a particularly preferred embodiment, however, the invention proposes that an optical spacing sensor is used to measure the spacing between the object and the optical inspection device, which detects the spacing to a surface of the object using a confocal chromatic sensor. According to the invention, such a sensor can be integrated into the optical inspection device and requires little additional installation space. An evaluation is possible continuously, even during the movement, and allows the provision of a particularly fast control with which the spacing can be kept constant throughout the entire movement within the required accuracy.

The measuring principle of an optical confocal sensor is as follows: A chromatic-confocal spacing measurement uses dispersion of white light (i.e. having different colors) in a focusing lens that bundles the light in the area of the material surface, preferably for optically visible light in the medium wavelength range (i.e. green light, for example). For this purpose, a white point light source is focused through a small pinhole onto the object with a dispersive lens (focusing lens). The dispersion causes the blue light component to focus closer to the lens and the red light component to focus further away from the lens. Light reflected from the object is decoupled from the illumination beam path by the same lens with a beam splitter and fed to a color-sensitive light sensor via a corresponding pinhole aperture. This filters out the portion of light that is focused and reflected precisely on the surface of the object. Spectral analysis of the reflected light allows changes in spacing to be detected very accurately and corrected accordingly.

Accordingly, the invention also relates to an inspection apparatus for material testing of an object transported in a production and/or conveyor line by means of a production and/or conveyor device along a conveying direction of a conveying plane at a conveying speed, having at least one optical inspection device according to the features of claim 9. The optical inspection device is movably fixed to the production and/or conveyor device by means of a positioning device, wherein the optical inspection device comprises an imaging unit and an illumination unit, and with at least one control unit which is adapted to control the positioning device and the optical inspection device, wherein the conveying direction and the conveying speed of the object in the production or conveyor line are known in the control unit. According to the invention, the control unit is adapted to move the optical inspection device along with the object, wherein the at least one image is taken by the optical inspection device during the movement of the object and the inspection device.

Preferably, the movement of the object in the production or conveyor device and the movement of the optical inspection device are uniform. This avoids or at least reduces damage to the object during transport and also prevents or at least reduces interference when imaging the images of the optical inspection device.

According to the invention, the inspection apparatus can be adapted for carrying out the method described above or parts thereof, in particular for carrying out the method according to one of claims 1 to 8. If necessary, the inspection apparatus is adapted for this purpose with the device components described and required for this purpose.

According to a preferred embodiment, the imaging unit may comprise a microscope. This means that the optics of the imaging unit are designed to capture high-resolution images of potential defect locations on the object.

A further preferred embodiment according to the invention provides that the illumination unit comprises a bright field illumination and/or a dark field illumination. Bright-field illumination and dark-field illumination, which can be switchable separately from one another in accordance with the invention, enable in particular different images of the same potential defect location to be taken with different illumination, which, as already described, enhances the detection and classification of different defects.

According to a preferred embodiment, the positioning device can be a SCARA robot with (at least or exactly) three rotary axes of movement and (at least or exactly) one translatory axis of movement in a serial kinematic system, with all axes of movement oriented perpendicular to the conveying plane.

In such an embodiment, the first and second axes of movement, starting from the mounting of the positioning device to the production and/or conveyor device, can be exclusively rotary axes of movement, and the third axis of movement, to which also the optical inspection device is (directly) fixed, can allow a rotational movement and a translational movement in the axial direction (for adjusting the spacing between the inspection device and the object).

As already described, such a SCARA robot enables a particularly smooth and uniform movement of the inspection device along with the movement of the object in the production and/or conveyor device. A translatory adjustment along the third axis of movement is particularly advantageous because, as already described, this minimizes the mass during height adjustment.

According to a particularly preferred embodiment, several optical inspection devices can be provided, each of which is fixed to the production and/or conveyor device in sequence with an associated positioning device in the conveying direction. This makes it possible to increase the total number of potential defect locations that can be subjected to material testing in the intended conveyor section.

It can be particularly advantageous for the multiple optical inspection devices to be arranged (preferably alternately) on different sides of the production and/or conveyor device in relation to the transport area of the production and/or conveyor device (on which the material to be transported is arranged). This means that the optical inspection devices are arranged on or close to the two opposite sides of the production and/or conveyor device which delimit the transport area transverse to the transport direction, i.e. some of the optical inspection devices are arranged on one side and some of the optical inspection devices are arranged on the other side. This extends the total inspection area that can be reached if the length of the arms of the positioning device does not cover the entire width of the object transverse to the transport direction. In addition, the range of movement of the optical positioning devices can be optimized such that an optical inspection device examines each of the potential defect locations by material testing that are positioned on the half of the object that is closest to the edge of the production and conveyor device at which the optical inspection device or the positioning device assigned to it is mounted. This minimizes the amount of movement required for each of the optical inspection devices.

According to a further optional embodiment, a camera unit may be provided - device in transport direction - in front of the at least one optical inspection, with which an image of the object in the production and/or conveyor line is taken and the image is evaluated in the control unit by means of image recognition to identify potential defect locations. This means that the potential defect locations on the object are known. Due to the known conveying speed and a known relative arrangement of the camera unit and the optical inspection device(s), the potential defect locations can be subjected to targeted material testing by the optical inspection devices. In principle, it is also possible to determine the positions of the potential defect locations on the object and to move to these by the control unit relative to the object accordingly with the optical inspection device(s).

According to the invention, the invention can be used for any transparent or non-transparent objects for material testing, e.g. TFT glass, float glass, plate-like objects or other piece goods.

Further advantages, features and possible applications of the invention are also apparent from the following description of embodiments and/or the drawing. All the features described and/or shown in the drawing are part of the subject matter of the invention, even independently of their combination in the claims or their back references.

It shows:
- Fig. 1: a three-dimensional view of an inspection apparatus according to an embodiment of the invention with an optical inspection device;
- Fig. 2: the imaging unit of the optical inspection device of the inspection apparatus according to Fig. 1;
- Fig. 3: the illumination unit of the optical inspection device of the inspection apparatus according to Fig. 1;
- Fig. 4: a three-dimensional view of an inspection apparatus according to a further embodiment of the invention with two optical inspection devices;
- Fig. 5: schematically the beam path and the images taken of a defect location 30 according to an exemplary use of an optical inspection device; and
- Fig. 6: schematically the beam path of a defect location 30 according to another exemplary embodiment.

The embodiments of the invention shown in the figures illustrate the inspection apparatus according to the invention by means of illustrative examples to explain a useful and advantageous embodiment. The invention is defined by the claims, and is not intended to be limited by the specific embodiments used to explain the invention. In particular, the specific examples of embodiments also show many advantageous embodiments of the invention which are advantageous, but not absolutely necessary, in the implementation of the invention.

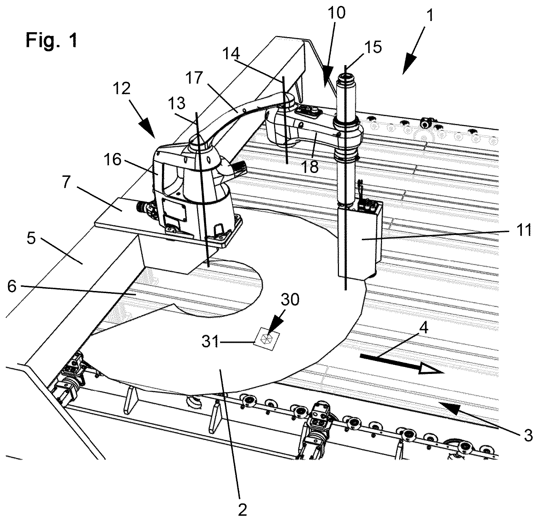

Fig. 1 shows a section of a production and/or conveyor device 1 of an industrial production and/or conveyor line with an object 2, which is transported in a conveying plane 3 along a conveying direction 4 at a known, in particular uniform, conveying speed. The conveyor device 1 has a stationary frame 5 and conveyor elements 6 that move relative to the frame 5, on which the object 2 rests and is thus transported in the conveying direction 4.

An inspection apparatus 10 comprises an optical inspection device 11, which is fixed to a mounting plate 7 of the frame 5 of the production and/or conveyor device 1 via a positioning device 12. The positioning device 12 is designed as a SCARA robot with three axes of movement 13, 14, 15, which can easily perform a movement of the optical inspection device 11 parallel to the conveying plane 3 (or to the surface of the object 2, which is usually aligned parallel to the conveying plane 3).

For this purpose, the SCARA robot 12 (used here and hereinafter synonymously for the term positioning device) comprises a first axis of movement 13, a second axis of movement 14 and a third axis of movement 16, all three of which are oriented orthogonally to the conveying plane 3. The first axis of movement 13 is guided in a mount 16, which is fixed on the mounting plate 7 on the frame 5 of the production and conveyor device 1, and allows a first arm 17 of the positioning device 12 to rotate about the first axis of movement 13 (axis of rotation). The arm 17 is actually formed in two parts with an upper and a lower arm, of which only the upper arm is shown for the sake of clarity. The second axis of movement 14 is guided at the end of the first arm 17 opposite the first axis of movement 13 and allows a second arm 18 of the positioning device 12 to rotate about the second axis of movement 14 (axis of rotation). The third axis of movement 15, on which the optical inspection device 11 is fixed, is guided at the end of the second arm 18 opposite the second axis of movement 14. The third axis of movement 15 allows the optical inspection device 11 to rotate about the third axis of movement 15 (axis of rotation)

During the rotations described above, the spacing between the optical inspection device 11 and the object 2 (or the material surface of the object 2) does not change. By means of correspondingly coordinated rotational movements about each of the first, second and third axes of rotation 13, 14, 15, it is possible to move the optical inspection device 11 to a previously identified potential defect location 30 on the object 2 and, during the movement of the object 2 in the conveying direction 4 at the known, preferably uniform, conveying speed, to move the optical inspection device 11 synchronously with the movement of the object 2. For this purpose, corresponding movement patterns for the three axes of movement 13, 14, 15 can also be predefined in a control unit not shown, so that the movement of the optical inspection device 11 can be realized particularly easily and quickly. Even independently of this, the control unit is preferably adapted to implement the movement of the optical inspection device 11 synchronously with the conveying of the object 2 on the production and conveyor device 1. For this purpose, the control unit is aware of the conveying direction 4 and the (each current) conveying speed of the production and/or conveyor device 1, for example via an interface to the production and/or conveyor device 1 or a sensor system connected to the control unit and suitably selectable by the skilled person.

According to a particularly preferred embodiment, the optical inspection device 11 can be oriented such that an imaging unit 21 of the optical inspection device captures the same image section 31 around a potential defect location 30 on object 2 during movement. This enables the imaging of several images of the potential defect location 30 under different imaging conditions (e.g. bright field and dark field illumination) and/or at different spacings to enable better detection and classification of defects, even with a moving object 2.

The third axis of movement 15 also allows a translational movement in axial direction, which enables the spacing between the object 2 or its material surface and the optical inspection device 11 to be changed or adjusted. This can be used, for example, for focusing the optical imaging unit 21 on the surface of the object 2, for fine adjustment of the spacing between the object 2 and the optical inspection device 11 or for taking a series of images with different spacing, as already described. As already described, an optical spacing sensor, such as a confocal chromatic sensor integrated into the optical inspection device 11, can be used to detect the spacing. It is controlled by the control unit described above, which is not shown in the figures.

Preferably, the movement of the object 2 is uniform. Uniform transportation of the object 2 reduces the risk of scratches and/or contamination deposits. Scratches are often caused by acceleration forces acting on the object relative to the conveyor elements, such as those that occur during start and stop processes during transportation. Contamination caused by the deposition of fine particles on the material surface often occurs when the object 2 comes to a standstill. These causes of defects are counteracted by a uniform movement of the object. The imaging of the optical inspection device 11 is also of better quality during a uniform movement, during which no significant acceleration forces act on the optical inspection device 11. According to the invention, the occurrence of acceleration forces can also be counteracted by suitably selected movement patterns during the inspection, for example by the control unit.

A typical material testing method for which the inspection apparatus 10 described above (including its control unit for controlling the optical inspection device 11 and the positioning device 12) can be adapted is, for example, as follows:
Potential defect locations 30 of the object 2 are or will be identified in advance or beforehand. In one possible embodiment, these can be communicated to the control unit via an interface. In another, optional embodiment of the invention, these potential defect locations of the object can also be determined in a process step preceding the actual material testing. For this purpose, a calibrated pre-test imaging device can be provided, which is arranged on the production and/or conveyor line of the object 2 and records the material surface of the object 2 during transport and identifies potential defect locations 30 by means of image evaluation (e.g. by changing the image structure at the image areas adjacent to the potential defect locations 30 or other measures known to the skilled person). The quality of the imaging is often not sufficient for a final defect detection and/or defect classification, which according to the invention is subsequently carried out in the course of the material testing.

Due to a known imaging position in the production and/or conveyor line and the known conveying speed of the object 2, the positions of identified potential defect locations 30 on the object 2 are known for the inspection apparatus 10.

The identified potential defect locations 30 are then moved to in sequence by at least one of possibly several provided optical inspection devices 11, in that the optical inspection device 11 is positioned at each of the previously identified potential defect locations 30 of the object 2 and is moved along with the moving object 2. In other words, the optical inspection device 11 is moved synchronously with the object 2.

It is particularly preferred that the image section 31 around the error location 30 is kept constant.

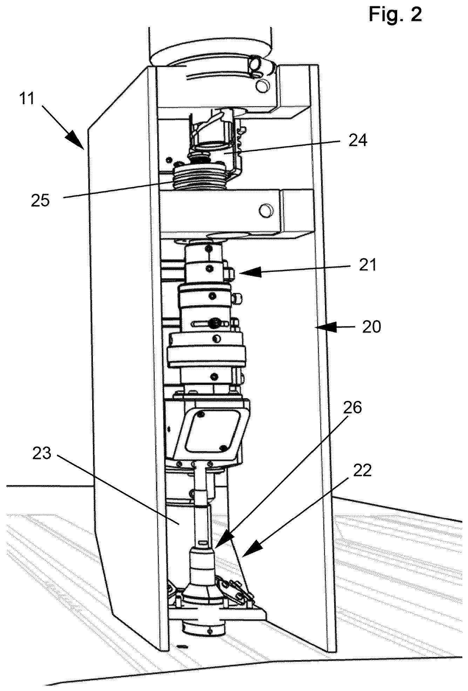

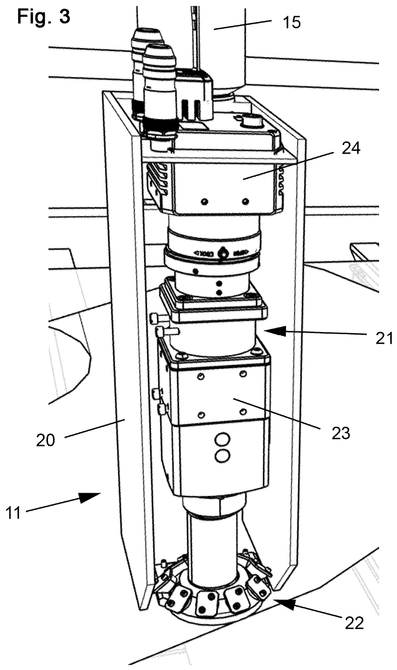

During the co-movement, the optical inspection device 11, controlled by the control unit, carries out the material testing, wherein preferably several images of the defect location 30 are taken under different recording conditions. This will be explained in more detail later with reference to the structure of a preferred optical inspection device 11, as shown in Figs. 2 and 3

According to the invention, the images can be evaluated in a manner known in general during the material testing to perform accurate defect detection and/or defect classification. This can take place in the control unit or in a downstream evaluation unit (also not shown), to which the images taken during material testing are forwarded for further evaluation. The images can, for example, be forwarded by the control unit.

In contrast to the prior art, in which an accurate material testing was only carried out during standstill times of the production and/or conveyor line and a more accurate material testing with an optical inspection device 11 could typically only be carried out at one to two typical defect locations 30 within usual cycle times, the material testing proposed according to the invention enables accurate material testing at five to ten potential defect locations 30 during the movement of the object 2 within the same usual cycle times, without the need to introduce additional standstill times in the production and/or conveyor line just for quality assurance or to carry out additional quality assurance measures downstream of the production or conveyor line.

Fig. 2 shows a preferred embodiment of an optical inspection device 11 according to the invention with a partially opened housing 20 to provide a view of the imaging unit 21. Parts of the illumination unit 22 are visible behind the imaging unit 21. The illumination unit 22 has a light source 25, a shielded beam path, which extends parallel to a microscope 23 and partially surrounds it. In the part of the beam path surrounding the microscope 23, bright field illumination is realized, in which the light reflected on the flat surface of the object 2 is reflected into the imaging optics of the microscope 23 to produce a bright, well illuminated image of the surface of the object. From the beam path progressing parallel to the microscope 23, the surface of the object 2 is irradiated from the side so that the light reflected on the flat surface of the object 2 is not reflected into the imaging optics of the microscope 23. This represents dark-field illumination, in which light is only reflected into the imaging optics of the microscope 23 by structures on the surface of the object, which are therefore particularly clearly visible through the dark-field illumination. Furthermore, a spacing sensor 26 is provided next to the microscope 23.

The imaging unit 21 comprises the microscope 23 as imaging optics, to which a high-resolution camera 24 is connected for imaging high-resolution images. The microscope 23 enables a particularly precise and detailed inspection of the potential defects. This can also be clearly seen in Fig. 3.

Fig. 3 shows the microscope 23 and the camera 24 in more detail in the housing 20 opened at the rear (in relation to Fig. 2). Fig. 3 also shows the third axis of movement 15 of the positioning device 12, on which the optical inspection device 11 is fixed.

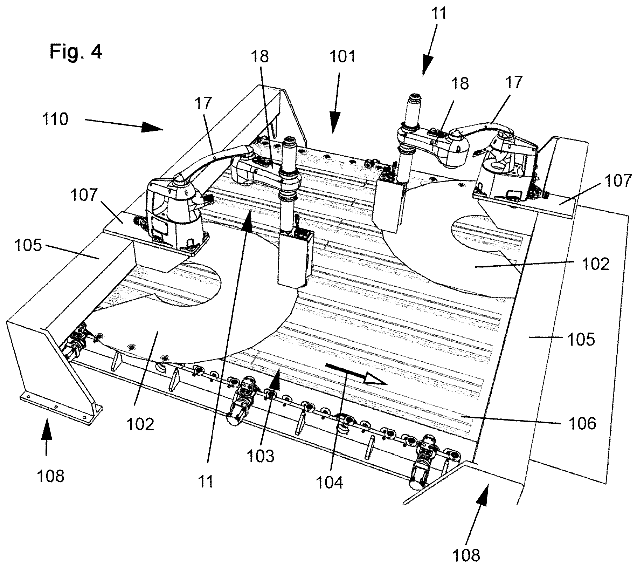

Fig. 4 shows a further embodiment of a production and conveyor device 101 according to the invention with an inspection apparatus 110, on which several (in the example shown exactly two) optical inspection devices 11 are provided. The optical inspection devices 11 are constructed identically to the exemplary embodiment described above according to Figs. 1, 2 and 3. Reference is made to this.

Objects 102 are transported on the production and conveyor device 101. The production and conveyor device 101 has a conveying plane 103, which is defined by the contact surface of the conveyer elements 106 on which the object 102 rests. The object 102 is transported in the conveying direction 104 at a known conveying speed.

On each of the opposite transverse struts 108 of the production and conveyor device 101 (with respect to the conveying direction 104), the production and conveyor device 101 comprises a frame 105, to which mounting plates 107 are fixed, which carry the optical inspection devices 11.

Several optical inspection devices 11 are provided in sequence in the conveying direction 104. This increases the total number of potential defect locations on the object 102 that can be subjected to material testing. Defects are not shown in Fig. 4.

According to the particularly preferred embodiment shown in Fig. 4, the optical inspection devices 11 are arranged alternately on the transverse struts 108 arranged opposite one another. This has the following advantage:
According to the invention, the first and second arms 17, 18 of the optical inspection devices 11 are just long enough to cover at least half the length of the transverse struts 108, but not the entire length. As a result, the individual optical inspection devices 11 are smaller and lighter, so that they can be moved more easily in synchronization with the object 102. According to the invention, the entire width of the production and/or conveyor device 101 can nevertheless be covered by the alternating arrangement of the optical inspection devices 11 on the opposite transverse struts 108. This is a particular advantage of this embodiment, which can be realized independently of or in combination with other embodiments having the advantages described for each of them.

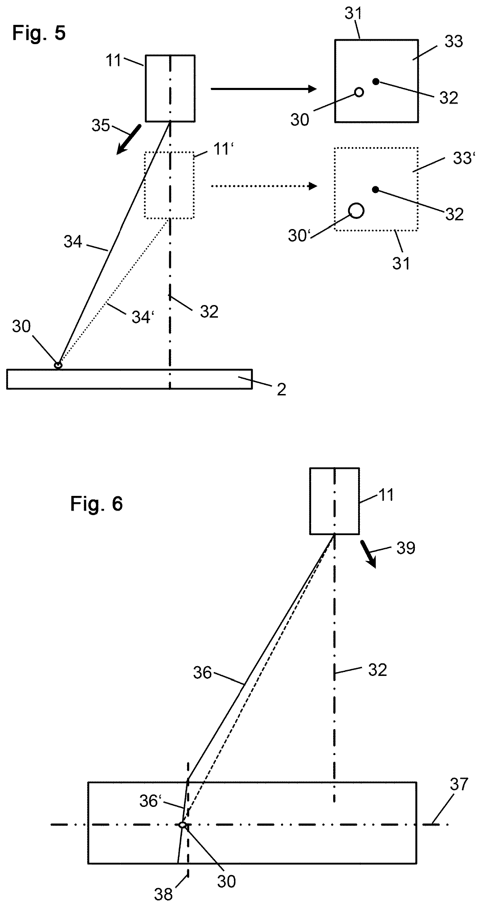

Fig. 5 schematically sketches the beam path and the images taken when several (shown here: two) images 33 ,33' are taken of a defect location 30, which is not in the optical axis 32 of the inspection device 11, at a different spacing of the inspection device 11 from an object 2 that is not transparent in this case. The defect is therefore formed on the surface of the object 2. Typically, only one of the several images taken 33, 33' is in focus.

The first image 33 is taken at a first spacing between the inspection device 11 and the object 2. The image section 31 of the image 33 is shown on the righthand side of Fig. 5, with an arrow pointing from the inspection device 11 to the image 33. The same applies to the image 33', which is taken at a second (smaller) spacing between the inspection device 11' and the object 2. The second image is taken in a position of the inspection device 11' in which the inspection device 11 whwn imaging of the first image is moved relative to the object 2 only in the direction of the optical axis 32 towards the object 2. When the object 2 is moving, the inspection device 11, 11' is also moved in accordance with the present invention, so that there is no relative movement between the inspection device 11, 11' and the object 2.

Images 33, 33' are the same size. The optical axis 32 lies (not visible in the images, but shown here for clarification) in the center of the image. According to the visual beams 34, 34', each of which includes different angles with the optical axis, the position of the defect location 30, 30' in the images 33, 33' lies between the center of the image (optical axis 32) and the edge of the image 33, 33'. Because the inspection device 11' is arranged closer to the object 2, the captured image section is smaller than with the inspection device 11, and the position of the defect location 30' is closer to the edge of the image 33'. The defect location 30' in image 33' is also shown larger than the defect location 30 in image 33.

Based on the known geometry, in particular the known spacing of the inspection units 11. 11' and the included angles between the visual beams 34, 34' and the optical axis 32, it is possible to calculate how the orientation of the inspection unit 11 relative to the object 2 must be changed if the spacing between the inspection unit 11 and object 2 is changed and the image positions of the defect locations 30, 30' in the images 33, 33' are to match.

The relative change in orientation between the inspection unit 11 and the inspection unit 11' (at a smaller spacing in the example shown here) can be calculated in a plane parallel to the surface of the object 2. Superimposing the movements (change in spacing and relative change in position) results in a combined movement 35, which is indicated by an arrow in Fig. 5 and can be adjusted by the positioning device 12.

Fig. 6 schematically sketches the beam path through a transparent object 2, in which a defect 30 is located inside the object 2. The visual beam 36 is refracted at the surface of the object 2 and progresses through the object as an angled visual beam 36'. Depending on the spacing between the inspection device 11 and the transparent object 2, a plane 37 parallel to the surface of the object 2 is sharply imaged inside the object 2, in the example shown here the plane 37 in which the defect 30 is located.

For example, to scan a vertical section 38 through the transparent object 2, the inspection device 11 must also be moved relative to the object in a plane parallel to the surface of the object 2 when the spacing between the inspection unit 11 and the object 2 is changed. This results in a combined movement 39, which is indicated by an arrow in Fig. 6 and can be adjusted by the positioning device 12. In another exemplary application, the combined movement 39 can also follow the refracted visual beam 36, for example such that all possible defect locations along the visual beam 36 are displayed at the same position in the image.

According to the invention and depending on the application, the skilled person can also perform other combined movements 35, 39 of the inspection device11. Accordingly, the applications explained in Figs. 5 and 6 are only examples of a useful superposition of the co-movement of the optical inspection device 11 with the moving (transported) object 2 proposed according to the invention with a relative movement between the inspection device 11 and the object 2. The relative movement can change the spacing between the object 2 or the surface of the object 2 and the inspection device 11 and/or the relative orientation of the inspection device 11 to the object 2 in a plane parallel to the surface of the object 2. This superposition proposed according to the invention is not limited to the examples shown but can also be applied by the skilled person to other applications.

### List of reference symbols:

- 1: Production and/or conveying device
- 2: Object
- 3: Conveying plane
- 4: Conveying direction
- 5: Frame
- 6: Conveyor element
- 7: Mounting plate

- 10: Inspection apparatus
- 11: Optical inspection device
- 12: Positioning device
- 13: First axis of movement
- 14: Second axis of movement
- 15: Third axis of movement
- 16: Mount
- 17: First arm
- 18: Second arm

- 20: Housing of the optical inspection device
- 21: Imaging unit
- 22: Illumination unit
- 23: Microscope as part of the imaging optics
- 24: Camera
- 25: Light source
- 26: Spacing sensor

- 30: Potential defect location
- 31: Image section
- 32: Optical axis
- 33: Image
- 34: Visual beam
- 35: Combined movement
- 36: Visual beam
- 37: Parallel plane in the object
- 38: Vertical section through the object
- 39: Combined movement

- 101: Production and/or conveying device
- 102: Object
- 103: Conveying plane
- 104: Conveying direction
- 105: Frame
- 106: Conveyor element
- 107: Mounting plate
- 108: Transverse struts
- 110: Inspection apparatus

## Claims

1. Method for material testing of an object (2, 102) in a production and/or conveyor line, in which the object (2, 102) is transported along a conveying direction (4, 104) in a conveying plane (3, 103) of a production and/or conveyor device (1, 101), in which
an optical inspection device (11) is positioned at at least one previously identified potential defect location (30) of the object (2, 102);
at least one image is taken by the optical inspection device (11) at the potential defect location (30) of the object (2, 102);
**characterized in that**
the object (2, 102) is moved during the material testing and the optical inspection device (11) is moved along with the object (2, 102), the at least one image being taken by the optical inspection device (11) during the movement of the object (2, 102) and optical inspection device (11).

2. Method according to claim 1, **characterized in that** the optical inspection device (11) is positioned in sequence at at least two previously identified potential defect locations (30) of the object (2, 102).

3. Method according to claim 1 and 2, **characterized in that** the optical inspection device (11) uses an imaging unit (21) with a microscope (23).

4. Method according to one of the preceding claims, **characterized in that** at least two images are taken of each potential defect location (30) of the object (2, 102).

5. Method according to claim 4, **characterized in that** during the imaging of the at least two images of the potential defect location (30), the spacing between the object (2, 102) or the surface of the object (2, 102) and the inspection device (11) and/or the relative orientation of the inspection device (11) to the object (2, 102) in a plane parallel to the surface of the object (2, 102) is changed.

6. Method according to one of the preceding claims, **characterized in that** the optical inspection device (11) is arranged on a positioning device (12), the optical inspection device (11) being moved along with the movement of the object (2, 102) in the conveying direction (4, 104) of the object (2, 102) by means of the positioning device (12).

7. Method according to claim 6, **characterized in that** a SCARA robot with three rotary axes of movement (13, 14, 15) and one translatory axis of movement (15) in a serial kinematic system is used as the positioning device (12), preferably with all axes of movement (13, 14, 15) oriented perpendicularly to the conveying plane (3, 103).

8. Method according to one of the preceding claims, **characterized in that** an optical spacing sensor (26) is used to measure the spacing between the object (2, 102) and the optical inspection device (11), which detects the spacing from a surface of the object (2, 102) using a confocal chromatic sensor.

9. Inspection apparatus for material testing of an object (2, 102) transported in a production and/or conveyor line by means of a production and/or conveyor device (1, 101) along a conveying direction (4, 104) in a conveying plane (3, 103) at a conveying speed, having at least one optical inspection device (11) which is fixed movably on the production and/or conveyor device (1, 101) by means of a positioning device (12), said optical inspection device (11) comprising an imaging unit (21) and an illumination unit (22), and with at least one control unit which is adapted to control the positioning device (12) and the optical inspection device (11), wherein the conveying direction (4, 104) and the conveying speed of the object (2, 102) in the production or conveyor line are known in the control unit, **characterized in that** the control unit is adapted to move the optical inspection device (11) along with the object (2, 102), the at least one image being taken by the optical inspection device (11) during the movement of the object (2, 102) and the inspection device (11).

10. Inspection apparatus according to claim 9, **characterized in that** the imaging unit (21) comprises a microscope (23).

11. Inspection apparatus according to claim 9 or 10, **characterized in that** the illumination unit (22) comprises bright-field illumination and/or dark-field illumination.

12. Inspection apparatus according to one of claims 9 to 11, **characterized in that** the positioning device (12) is a SCARA robot with three rotary axes of movement (13, 14, 15) and one translatory axis of movement (15) in a serial kinematic system, preferably all axes of movement (13, 14, 15) being oriented perpendicular to the conveying plane (3, 103).

13. Inspection apparatus according to claim 12, **characterized in that** the first and second axes of movement (13, 14), starting from the fixing of the positioning device (12) on the production and/or conveyor device (1, 101), are exclusively rotary axes of movement (13, 14), and the third axis of movement (15), on which the optical inspection device (11) is also fixed, permits a rotational movement and a translational movement in axial direction.

14. Inspection apparatus according to one of claims 9 to 13, **characterized in that** a plurality of optical inspection devices (11) are fixed in sequence to the production and/or conveyor device (1, 101) in the conveying direction (4, 104), each having an associated positioning device (12)conveyor device.

15. The inspection apparatus according to claim 14, **characterized in that** the plurality of optical inspection devices (11) are arranged on different sides of the production and/or conveyor device (1, 101) with respect to the transport area of the production and/or conveyor device (1, 101).

16. Inspection apparatus according to one of claims 9 to 15, **characterized in that** a camera unit is provided - in the conveying direction (4, 104) - in front of the at least one optical inspection device (11), with which an image of the object in the production and/or conveyor line is taken and the image is evaluated in the control unit by means of image recognition for identifying potential defect locations (30).
